# EUROPEAN PATENT APPLICATION

(11) **EP 4 117 053 A1**
(43) Date of publication of application: **11.01.2023**
(21) Application number: 21764316.2
(22) Date of filing: 01.03.2021
(51) Int. Cl.: H01M 4/13, H01M 4/62, H01M 10/052, H01M 10/0562, H01M 10/0585

(54) **SOLID-STATE BATTERY**

(30) Priority: 06.03.2020 JP 2020038804
(71) Applicant: TOYOTA JIDOSHA KABUSHIKI KAISHA, Toyota-shi Aichi 471-8571 (JP); Panasonic Holdings Corporation, Osaka 571-8501 (JP)
(72) Inventor: NOMOTO, Kazushige, Toyota-shi, Aichi 471-8571 (JP); MIYAZAKI, Akinobu, Kadoma-shi, Osaka 571-8501 (JP)
(74) Representative: D Young & Co LLP
(86) International application number: PCT/JP2021/007638
(87) International publication number: WO 2021/177212

(57) **Abstract**

The main objective of the present disclosure is to provide a solid-state battery in which short circuit occurrence is suppressed even when a high voltage is applied to a unit battery. In the disclosure, the problem is solved by providing a solid-state battery in which a plurality of unit batteries are arranged along the thickness direction and connected in series, wherein: the unit battery has a positive electrode current collector, a positive electrode layer, a solid electrolyte layer, a negative electrode layer, and a negative electrode current collector in this order; the solid-state battery has a total voltage of at least 30 V at an SOC of 100%; and the positive electrode layer in the unit battery contains a first halide solid electrolyte.

## Description

### Technical Field

The present disclosure relates to a solid-state battery.

### Background Art

A solid-state battery is a battery including a solid electrolyte layer between a cathode layer and an anode layer, and one of the advantages thereof is that the simplification of a safety device may be more easily achieved compared to a liquid-based battery including a liquid electrolyte containing a flammable organic solvent. For example, Patent Literature 1 discloses a series stacked all-solid state battery comprising 2 or more of a unit battery stacked in series, and also discloses that a cathode active material layer, a solid electrolyte layer, and an anode active material layer include a sulfide solid electrolyte.

Also, Patent Literature 2 discloses a Li₃PS₄-LiBr-LiI-based sulfide solid electrolyte. Patent Literature 3 discloses a solid electrolyte represented by Li_{6-3z}Y_{z}X₆, provided that z satisfies 0 < z < 2, and X is Cl or Br.

### Citation List

### Patent Literatures

Patent Literature 1: Japanese Patent Application Laid-Open (JP-A) No. 2019-096476
Patent Literature 2: JP-A No. 2015-11901
Patent Literature 3 : International Application Publication: WO 2018/025582

### Summary of Disclosure

### Technical Problem

By connecting a plurality of a unit battery in series, a high-voltage battery can be achieved. Meanwhile, for example, when a solid-state battery in which a plurality of a unit battery is connected in series, is deteriorated, a total voltage of the solid-state battery is applied to one unit battery, and short circuit (internal short circuit) may occur in the unit battery.

The present disclosure has been made in view of the above circumstances, and a main objective thereof is to provide a solid-state battery in which short circuit occurrence is suppressed even when a high voltage is applied to a unit battery.

### Solution to Problem

In order to achieve the objective, the present disclosure provides a solid-state battery in which a plurality of a unit battery is arranged along the thickness direction and connected in series, wherein: the unit battery includes a cathode current collector, a cathode layer, a solid electrolyte layer, an anode layer, and an anode current collector in this order; a total voltage of the solid-state battery at an SOC of 100% is 30 V or more; and the cathode layer in the unit battery contains a first halide solid electrolyte.

According to the present disclosure, the cathode layer in the unit battery contains a first halide solid electrolyte, and thus a solid-state battery in which short circuit occurrence is suppressed even when a high voltage is applied to a unit battery, may be obtained.

In the disclosure, the first halide solid electrolyte may be represented by the below composition formula (1):

Li_{α}M¹_{β}X¹_{γ} ... Formula (1);

each of α, β, and γ may be a value larger than 0; M¹ may contain at least one selected from the group consisting of metal elements other than Li and metalloid elements; and X¹ may contain at least one selected from the group consisting of F, Cl, Br and I.

In the disclosure, the first halide solid electrolyte may be represented by Li_{6-3A}M¹_{A}X¹₆, provided that A satisfies 0 < A < 2, M¹ is at least one kind of Y and In, and X¹ is at least one kind of Cl and Br.

In the disclosure, the M¹ may contain at least the Y.

In the disclosure, the solid electrolyte layer may contain a sulfide solid electrolyte.

In the disclosure, the sulfide solid electrolyte may contain Li, P, and S.

In the disclosure, the solid electrolyte layer may include a plurality of layers; and among the plurality of layers, a first layer closest to the cathode layer may contain a second halide solid electrolyte.

In the disclosure, the second halide solid electrolyte may be represented by the below composition formula (2):

LiₚM²_{q}X²ᵣ ... Formula (2);

each of p, q, and r may be a value larger than 0; M² may contain at least one selected from the group consisting of metal elements other than Li and metalloid elements; and X² may contain at least one selected from the group consisting of F, Cl, Br and I.

In the disclosure, the second halide solid electrolyte may be represented by Li_{6-3B}M²_{B}X²₆, provided that B satisfies 0 < B < 2, M² is at least one kind of Y and In, and X² is at least one kind of Cl and Br.

In the disclosure, the M² may contain at least the Y.

In the disclosure, among the plurality of layers, a layer other than the first layer may contain a sulfide solid electrolyte.

In the disclosure, the sulfide solid electrolyte may contain Li, P, and S.

### Advantageous Effects of Disclosure

The solid-state battery in the present disclosure exhibits an effect such that short circuit occurrence can be suppressed even when a high voltage is applied to a unit battery.

### Brief Description of Drawings

FIG. 1 is a schematic cross-sectional view exemplifying the unit battery in the present disclosure.
FIG. 2 is a schematic cross-sectional view exemplifying the all-solid-state battery in the present disclosure.
FIG. 3 is a schematic cross-sectional view exemplifying the unit battery in the present disclosure.
FIGS. 4A and 4B are the results of charge tests for all-solid-state batteries obtained in Experimental Example 1 and Comparative Experimental Example 1.
FIG. 5 is the result of a charge test for an all-solid-state battery obtained in Experimental Example 7.

### Description of Embodiments

The solid-state battery in the present disclosure will be hereinafter explained in details. Incidentally, the solid-state battery refers to a battery including a solid electrolyte. Hereinafter, as a solid-state battery, "an all-solid-state battery" that is a solid-state battery not including a liquid-based material, will be described in details as an example.

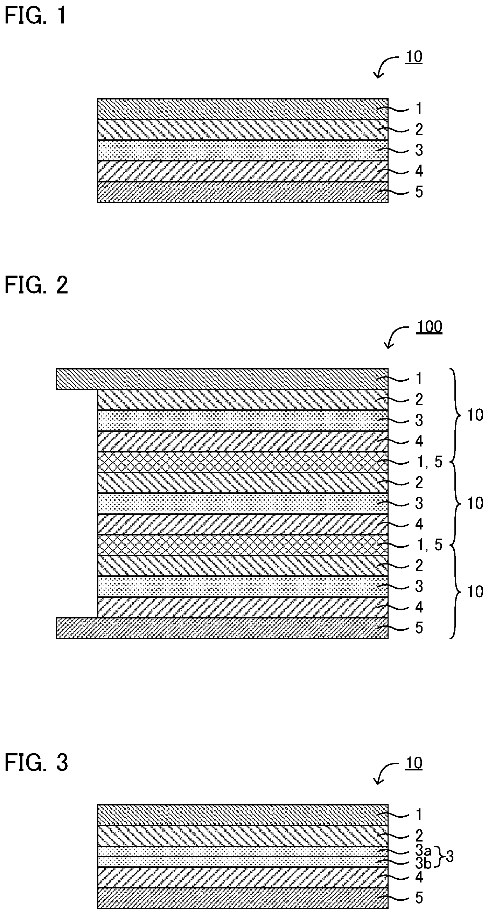

FIG. 1 is a schematic cross-sectional view exemplifying the unit battery in the present disclosure, and FIG. 2 is a schematic cross-sectional view exemplifying the all-solid-state battery in the present disclosure. Unit battery 10 shown in FIG. 1 includes cathode current collector 1, cathode layer 2, solid electrolyte layer 3, anode layer 4 and anode current collector 5 in this order along the thickness direction. Also, all-solid-state battery 100 shown in FIG. 2 includes a plurality of unit battery 10 arranged along a thickness direction and connected in series.

Also, a total voltage of the all-solid-state battery 100 shown in FIG. 2 at an SOC of 100% is 30 V or more. Also, the cathode layer 1 in the unit battery 10 contains a first halide solid electrolyte.

According to the present disclosure, the cathode layer in the unit battery contains a first halide solid electrolyte, and thus an all-solid-state battery in which short circuit occurrence is suppressed even when a high voltage is applied to a unit battery, may be obtained. Here, as described above, by connecting a plurality of a unit battery in series, a high-voltage battery can be achieved. Meanwhile, for example, when an all-solid-state battery in which a plurality of a unit battery is connected in series, is deteriorated, a total voltage of the all-solid-state battery may be applied to one unit battery. Although it is an extreme example, for example, when one unit battery is normal, and voltage degrade (such as voltage degrade due to foreign substance) occurs in all the other unit batteries, it is presumed that the total voltage would be applied to the one unit battery.

When the total voltage of the all-solid-state batter is applied to one unit battery, an oxidation decomposition reaction of a solid electrolyte included in a cathode layer (especially the solid electrolyte positioned around the cathode active material and the conductive material) may occur. A sulfide solid electrolyte has high ion conductivity, and is superior in performance as a solid electrolyte, but when the oxidation and decomposition reaction (such as 2Li₃PS₄ → Li₄P₂S₆+2S+2Li⁺+2e⁻) occurs, the ion conductivity of the oxidation decomposition product (Li₄P₂S₆) is also high, and thus generated Li tends to move to the anode layer side. As a result, Li dendrite is deposited in the anode layer, and short circuit (internal short circuit) tends to occur. For this reason, there is a problem that the number of the unit battery to be connected in series may not be easily increased. Such a problem is a new problem that has not been conventionally known.

In contrast, in the present disclosure, a first halide solid electrolyte is used in the cathode layer. Regarding this first halide solid electrolyte, even when the oxidation decomposition reaction (such as Li₃YCl₆ → YCl₃+LiCl+Cl₂(g)+2Li⁺+2e⁻) occurs, the ion conductivity of the oxidation decomposition product (YCl₃) is low. Therefore, the oxidation decomposition reaction does not easily occur continuously, and thus the amount of Li to be generated is decreased, and the Li generated is not easily conducted in the cathode layer; thereby, the Li dendrite is prevented from depositing in the anode layer. In this manner, the present disclosure provides an all-solid-state battery in which short circuit occurrence is suppressed even when a high voltage is applied to a unit battery. Also, the later described Experimental Examples show a case where M¹ is Y (yttrium), but even when it is M¹ other than Y, the ion conductivity of the oxidation decomposition products is respectively low, and thus similar effect can be obtained.

The total voltage of the all-solid-state battery in the present disclosure at an SOC of 100% is 30 V or more. "The total voltage at an SOC of 100%" refers to the summed total of the voltages of each unit battery in fully charged state that is SOC (State Of Charge) of 100%. The total voltage at the SOC of 100% may be 40 V or more, may be 50 V or more, may be 60 V or more, and may be 100 V or more. Meanwhile, the total voltage at the SOC of 100% is not particularly limited, but 400 V or less, for example.

### 1. Unit battery

The unit battery in the present disclosure includes a cathode current collector, a cathode layer, a solid electrolyte layer, an anode layer and an anode current collector in this order.

### (1) Cathode layer

The cathode layer in the present disclosure is a layer containing at least a cathode active material and a solid electrolyte. The cathode layer may further contain at least one of a conductive material and a binder.

### (i) Cathode active material

The cathode layer contains a cathode active material. Examples of the cathode active material may include an oxide active material. Specific examples of the oxide active material may include a rock salt bed type active material such as LiCoO₂, LiMnO₂, LiNiO₂, LiVO₂, and LiNi_{1/3}Co_{1/3}Mn_{1/3}O₂; a spinel type active material such as LiMn₂O₄, and Li(Ni_{0.5}Mn_{1.5})O₄; and an olivine type active material such as LiFePO₄, LiMnPO₄, LiNiPO₄ and LiCuPO₄. Examples of the shape of the cathode active material may include a granular shape.

The surface of the cathode active material may be coated with a coating layer. The reason therefor is to inhibit the reaction of the cathode active material with the sulfide solid electrolyte. Examples of the material for the coating layer may include a Li-ion conductive oxide such as LiNbO₃, Li₃PO₄ and LiPON. The average thickness of the coating layer is, for example, 1 nm or more and 20 µm or less, and may be 1 nm or more and 10 nm or less. The proportion of the cathode active material in the cathode layer is, for example, 30 weight% or more, may be 50 weight% or more and may be 70 weight% or more.

### (ii) Solid electrolyte

The cathode layer contains a first halide solid electrolyte.

The first halide solid electrolyte may be represented by the below composition formula (1):

Li_{α}M¹_{β}X¹_{γ} ... Formula (1) .

Here, each of α, β, and γ is a value larger than 0.

M¹ contains at least one selected from the group consisting of metal elements other than Li and metalloid elements. M¹ may be at least one element selected from the group consisting of metal elements other than Li and metalloid elements. X¹ contains at least one selected from the group consisting of F, Cl, Br and I. X¹ may be at least one selected from the group consisting of F, Cl, Br and I. According to the above configurations, the ion conductivity of the first halide solid electrolyte can be further improved. Thereby, the output properties of the battery can be further improved.

In the composition formula (1), α, β, and γ may satisfy 2.5 ≤ α ≤ 3, 1 ≤ β ≤ 1.1, and γ = 6. According to the above configurations, the ion conductivity of the first halide solid electrolyte can be further improved.

In the present disclosure, "metalloid elements" are B, Si, Ge, As, Sb and Te. In the present disclosure, "metal elements" are all the elements included in the 1st group to the 12th group in the periodic table excluding hydrogen; and all the elements included in the 13th group to the 16th group in the periodic table excluding B, Si, Ge, As, Sb, Te, C, N, P, O, S and Se. In other words, "metalloid elements" or "metal elements" are the element group that can be a cation when an inorganic compound and a halogen compound are formed.

In the composition formula (1), M¹ may contain Y (yttrium). In other words, the first halide solid electrolyte may contain Y as a metal element. According to the above configurations, the ion conductivity of the first halide solid electrolyte can be further improved.

The first halide solid electrolyte containing Y may be, for example, a compound represented by the composition formula of LiₐMe_{b}Y_{c}X₆. Here, a, b, and c satisfy a+mb+3c = 6 and c > 0. Me is at least one selected from the group consisting of metal elements excluding Li and Y and metalloid elements. m is a valence of Me. X is at least one selected from the group consisting of F, Cl, Br and I. Me may be at least one selected from the group consisting of Mg, Ca, Sr, Ba, Zn, Sc, Al, Ga, Bi, Zr, Hf, Ti, Sn, Ta and Nb. According to the above configurations, the ion conductivity of the first halide solid electrolyte can be further improved.

The first halide solid electrolyte may be represented by the below composition formula (A1):

Li_{6-3d}Y_{d}X₆ ... Formula (A1).

In the composition formula (A1), X is at least one selected from the group consisting of F, Cl, Br and I, or two kinds or more of the elements selected from the group. In the composition formula (A1), d satisfies 0 < d < 2. According to the above configurations, the ion conductivity of the first halide solid electrolyte can be further improved.

The first halide solid electrolyte may be represented by the below composition formula (A2):

Li₃YX₆ ... Formula (A2).

In the composition formula (A2), X is at least one selected from the group consisting of F, Cl, Br and I, or two kinds or more of the elements selected from the group. According to the above configurations, the ion conductivity of the first halide solid electrolyte can be further improved.

The first halide solid electrolyte may be represented by the below composition formula (A3):

Li_{3-3δ}Y_{1+δ}Cl₆ ... Formula (A3) .

In the composition formula (A3), δ satisfies 0 < δ ≤ 0.15. According to the above configurations, the ion conductivity of the first halide solid electrolyte can be further improved.

The first halide solid electrolyte may be represented by the below composition formula (A4):

Li_{3-3δ}Y_{1+δ}Br₆ ... Formula (A4).

In the composition formula (A4), δ satisfies 0 < δ ≤ 0.25. According to the above configurations, the ion conductivity of the first halide solid electrolyte can be further improved.

The first halide solid electrolyte may be represented by the below composition formula (A5):

Li_{3-3δ+a}Y_{1+δ-a}MeₐCl_{6-x-y}BrₓI_{y} ... Formula (A5).

In the composition formula (A5), Me contains at least one selected from the group consisting of Mg, Ca, Sr, Ba and Zn. Me may be at least one selected from the group consisting of Mg, Ca, Sr, Ba and Zn. In the composition formula (A5), δ, a, x and y satisfy -1 < δ < 2, 0 < a < 3, 0 < (3-3δ+a), 0 < (1+δ-a), 0 ≤ x ≤ 6, 0 ≤ y ≤ 6, and (x+y) ≤ 6. According to the above configurations, the ion conductivity of the first halide solid electrolyte can be further improved.

The first halide solid electrolyte may be represented by the below composition formula (A6):

Li_{3-3δ}Y_{1+δ-a}MeₐCl_{6-x-y}BrₓI_{y} ... Formula (A6) .

In the composition formula (A6), Me contains at least one selected from the group consisting of Al, Sc, Ga and Bi. Me may be at least one selected from the group consisting of Al, Sc, Ga and Bi. In the composition formula (A6), δ, a, x and y satisfy -1 < δ < 1, 0 < a < 2, 0 < (1+δ-a), 0 ≤ x ≤ 6, 0 ≤ y ≤ 6, and (x+y) ≤ 6. According to the above configurations, the ion conductivity of the first halide solid electrolyte can be further improved.

The first halide solid electrolyte may be represented by the below composition formula (A7):

Li_{3-3δ-a}Y_{1+δ-a}MeₐCl_{6-x-y}BrₓI_{y} ... Formula (A7)_{.}

In the composition formula (A7), Me contains at least one selected from the group consisting of Zr, Hf and Ti. Me may be at least one selected from the group consisting of Zr, Hf and Ti. In the composition formula (A7), δ, a, x and y satisfy -1 < δ < 1, 0 < a < 1.5, 0 < (3-3δ-a), 0 < (1+δ-a), 0 ≤ x ≤ 6, 0 ≤ y ≤ 6, and (x+y) ≤ 6. According to the above configurations, the ion conductivity of the first halide solid electrolyte can be further improved.

The first halide solid electrolyte may be represented by the below composition formula (A8):

Li_{3-3δ-2a}Y_{1+δ-a}MeₐCl_{6-x-y}BrₓI_{y} ... Formula (A8)_{.}

In the composition formula (A8), Me contains at least one selected from the group consisting of Ta and Nb. Me may be at least one selected from the group consisting of Ta and Nb. In the composition formula (A8), δ, a, x and y satisfy -1 < δ < 1, 0 < a < 1.2, 0 < (3-3δ-2a), 0 < (1+δ-a), 0 ≤ x ≤ 6, 0 ≤ y ≤ 6, and (x+y) ≤ 6. According to the above configurations, the ion conductivity of the first halide solid electrolyte can be further improved.

Examples of the first halide solid electrolyte may include Li₃YX₆, Li₂MgX₄, Li₂FeX₄, Li(Al,Ga,In)X₄ and Li₃(Al,Ga,In)X₆. In these materials, X is at least one selected from the group consisting of F, Cl, Br and I. In the present disclosure, "(Al,Ga,In)" refers to at least one kind of element selected from the group consisting of the elements in the parenthesis. In other words, "(Al,Ga,In)" means the same as "at least one kind selected from the group consisting of Al, Ga and In". The same applies when the other elements are described as above.

X (that is an anion) included in the first halide solid electrolyte contains at least one selected from the group consisting of F, Cl, Br and I, and may further contain oxygen. According to the above configurations, the ion conductivity of the first halide solid electrolyte can be further improved.

The first halide solid electrolyte may be, as described above, represented by the composition formula (1). Further, the first halide solid electrolyte may be a solid electrolyte represented by Li_{6-3A}M¹_{A}X¹₆, provided that A satisfies 0 < A < 2, M¹ is at least one kind of Y and In, and X¹ is at least one kind of Cl and Br.

In Li_{6-3A}M¹_{A}X¹₆, when M¹ is at least one kind of Y and In, A is larger than 0, may be 0.75 or more, and may be 1 or more. Meanwhile, A is smaller than 2, may be 1.5 or less, and may be 1.25 or less. M¹ is at least one kind of Y and In, preferably contains at least Y, and may be just Y. X¹ is at least one kind of Cl and Br, may be just Cl, may be just Br, and may be both of Cl and Br.

The solid electrolyte represented by Li_{6-3A}M¹_{A}X¹₆ may include a first crystal phase of which orientation of X¹ is the same as the orientation of Br in Li₃ErBr₆ having a crystal structure belonging to a space group C2/m. In this case, characteristic peaks are observed in an X-ray diffraction measurement using a CuKα ray, in a range of 2θ respectively being 25° to 28°, 29° to 32°, 41° to 46°, 49° to 55°, and 51° to 58°. Also, when I₂₀₀ designates a peak intensity of the first crystal phase corresponding to (200) surface in the crystal structure of Li₃ErBr₆, and I₁₁₀ designates a peak intensity of the first crystal phase corresponding to (110) surface, I₁₁₀/I₂₀₀ ≤ 0.01 may be satisfied. Also, when FWHM₁ designates a half value width of the peak of the first crystal phase corresponding to (200) surface in the crystal phase of Li₃ErBr₆, and 2θc₁ designates a diffraction angle of the center of the peak (peak central value), FWHM₁/2θc₁ ≥ 0.015 may be satisfied.

The solid electrolyte represented by Li_{6-3A}M¹_{A}X¹₆ may include a second crystal phase of which orientation of X¹ is the same as the orientation of Cl in Li₃ErCl₆ having a crystal structure belonging to a space group P-3m1. In this case, characteristic peaks are observed in an X-ray diffraction measurement using a CuKα ray, in a range of 2θ respectively being 29.8° to 32°, 38.5° to 41.7°, 46.3° to 50.4°, and 50.8° to 55.4°. Also, when I₃₀₃ designates a peak intensity of the second crystal phase corresponding to (303) surface in the crystal structure of Li₃ErCl₆, and I'₁₁₀ designates a peak intensity of the second crystal phase corresponding to (110) surface, I'₁₁₀/I₃₀₃ ≤ 0.3 may be satisfied. Also, when FWHM₂ designates a half value width of the peak of the second crystal phase corresponding to (303) surface in the crystal structure of Li₃ErCl₆, and 2θc₂ designates a diffraction angle of the center of the peak (peak central value), FWHM₂/2θc₂ ≥ 0.015 may be satisfied.

The solid electrolyte represented by Li_{6-3A}M¹_{A}X¹₆ may include a third crystal phase of which orientation of X¹ is the same as the orientation of Cl in Li₃YbCl₆ having a crystal structure belonging to a space group Pnma. In this case, characteristic peaks are observed in an X-ray diffraction measurement using a CuKα ray, in a range of 2θ respectively being 29.8° to 32°, 38.5° to 41.7°, 46.3° to 50.4°, and 50.8° to 55.4°. Also, when FWHM₃ designates a half value width of the peak of the third crystal phase corresponding to (231) surface in the crystal structure of Li₃YbCl₆, and 2θc₃ designates a diffraction angle of the center of the peak (peak central value), FWHM₃/28c₃ ≥ 0.015 may be satisfied.

The solid electrolyte represented by Li_{6-3A}M¹_{A}X¹₆ in which X¹ contains at least Br, may include a fourth crystal phase of which peaks are observed in an X-ray diffraction measurement using a CuKα ray, in a range of 2θ respectively being 13.1° to 14.5°, 26.6° to 28.3°, 30.8° to 32.7°, 44.2° to 47.1°, 52.3° to 55.8°, and 54.8° to 58.5°. Also, when FWHM₄ designates a half value width of the peak observed in the range of 2θ being 26.6° to 28.3°, and 2θc₄ designates a diffraction angle of the center of the peak (peak central value), FWHM₄/2θc₄ ≥ 0.015 may be satisfied. Also, when I₁ designates an intensity of the peak observed in the range of 2θ being 26.6° to 28.3°, and I₂ designates an intensity of the peak observed in the range of 2θ being 15.0° to 16.0°, I₂/I₁ ≤ 0.1 may be satisfied, and I₂/I₁ ≤ 0.01 may be satisfied. Incidentally, when a peak is not confirmed in the range of 2θ being 15.0° to 16.0°, it is I₂ = 0.

The solid electrolyte represented by Li_{6-3A}M¹_{A}X¹₆ in which X¹ contains at least Cl, may include a fifth crystal phase of which peaks are observed in an X-ray diffraction measurement using a CuKα ray, in a range of 2θ respectively being 15.3° to 16.3°, 29.8° to 32°, 38.5° to 41.7°, 46.3° to 50.4°, and 50.8° to 55.4°. Also, when FWHM₅ designates a half value width of the peak observed in the range of 2θ being 29. 8° to 32°, and 2θc₅ designates a diffraction angle of the center of the peak (peak central value), FWHM₅/2θc₅ ≥ 0.015 may be satisfied. Also, when I₃ designates an intensity of the peak observed in the range of 2θ being 29.8° to 32°, and I₄ designates an intensity of the peak observed in the range of 2θ being 15.3° to 16.3°, I₄/I₃ ≤ 0.3 may be satisfied.

The proportion of the first halide solid electrolyte in the cathode layer is, for example, 10 weight% or more and 60 weight% or less. Also, the cathode layer may contain just the first halide solid electrolyte as a solid electrolyte, and may further contain an additional solid electrolyte. In the latter case, the proportion of the first halide solid electrolyte with respect to all the solid electrolytes included in the cathode layer is, for example, 50 weight% or more, may be 70 weight% or more, and may be 90 weight% or more.

Also, the first halide solid electrolyte may be obtained by, for example, conducting a mechanical milling treatment to a raw material composition. For example, when the raw material composition contains LiCl and YCl₃ in the molar ratio of LiCl : YCl₃ = 3 : 1, by conducting the mechanical milling treatment thereto, the first halide solid electrolyte represented by Li₃YCl₆ is obtained.

### (iii) Cathode layer

The cathode layer may contain a conductive material and a binder. Examples of the conductive material may include a carbon material. Examples of the carbon material may include a particulate carbon material such as acetylene black (AB) and Ketjen black (KB), and a fiber carbon material such as carbon fiber, carbon nanotube (CNT), and carbon nanofiber (CNF). Examples of the binder may include a fluorine-based binder such as polyvinylidene fluoride (PVDF). The thickness of the cathode layer is, for example, 0.1 µm or more and 1000 µm or less.

### (2) Solid electrolyte layer

The solid electrolyte layer in the present disclosure is a layer containing at least a solid electrolyte. Also, the solid electrolyte layer may contain a binder other than the solid electrolyte.

Examples of the solid electrolyte to be used in the solid electrolyte layer may include an inorganic solid electrolyte such as a halide solid electrolyte, a sulfide solid electrolyte, an oxide solid electrolyte, and a nitride solid electrolyte. Incidentally, the halide solid electrolyte to be used in the solid electrolyte layer may be referred to as a second halide solid electrolyte.

The second halide solid electrolyte may be represented by the below composition formula (2):

LiₚM²_{q}X²ᵣ ... Formula (2).

Each of p, q, and r is a value larger than 0. M² contains at least one selected from the group consisting of metal elements other than Li and metalloid elements. X² contains at least one selected from the group consisting of F, Cl, Br and I. Preferable embodiments of LiₚM²_{q}X²ᵣ are the same as the preferable embodiments of Li_{α}M¹_{β}X¹_{γ} described above; thus, the descriptions herein are omitted. Incidentally, M², X², p, q, and r respectively correspond to M¹, X¹, α, β, and γ.

The second halide solid electrolyte may be, for example, Li_{6-3B}M²_{B}X²₆, provided that B satisfies 0 < B < 2, M² is at least one kind of Y and In, and X² is at least one kind of Cl and Br. Preferable embodiments of Li_{6-3B}M²_{B}X²₆ are the same as the preferable embodiments of Li_{6-3A}M¹_{A}X¹₆ described above; thus, the descriptions herein are omitted. Incidentally, B, M², and X² respectively correspond to A, M¹, and X¹.

The second halide solid electrolyte and the first halide solid electrolyte may be different compounds, and may be the same compound. As the second halide solid electrolyte, compounds (such as the compounds described in any of the composition formulas (A1) to (A8)) exemplified as the first halide solid electrolyte may be used.

In addition, the sulfide solid electrolyte preferably contains Li, M³ (M³ is at least one kind of P, As, Sb, Si, Ge, Sn, B, Al, Ga, and In), and S. Also, M³ preferably contains at least P. The sulfide solid electrolyte may further contain at least one of O and halogen. Examples of the halogen may include F, Cl, Br, and I.

It is preferable that the sulfide solid electrolyte includes an ion conductor containing Li, P, and S. The ion conductor preferably includes a PS₄³⁻ structure as an anion structure. The proportion of the PS₄³⁻ structure with respect to all the anion structures in the ion conductor is, for example, 50 mol% or more, may be 70 mol% or more and may be 90 mol% or more. The proportion of the PS₄³⁻ structure may be determined by, for example, Raman spectroscopy, NMR, and XPS.

The sulfide solid electrolyte is preferably configured by an ion conductor containing Li, P, and S, and at least one of LiBr and LiI. At least a part of LiBr and LiI is preferably respectively present in the state taken into the structure of the ion conductor as a LiBr component and a LiI component. The proportion of LiBr and LiI included in the sulfide solid electrolyte is, respectively, for example, 1 mol% or more and 30 mol% or less, and may be 5 mol% or more and 20 mol% or less.

The sulfide solid electrolyte preferably has, for example, a composition represented by (100-a-b) (Li₃PS₄)-aLiBr-bLiI. "a" satisfies, for example, 1 ≤ a ≤ 30, and may satisfy 5 ≤ a ≤ 20. "b" satisfies, for example, 1 ≤ b ≤ 30, and may satisfy 5 ≤ b ≤ 20.

The sulfide solid electrolyte is preferably provided with a crystal phase (crystal phase A) including peaks at the positions of 2θ = 20.2° ± 0.5° and 23.6° ± 0.5° in an X-ray diffraction measurement using a CuKα-ray. The reason therefor is that the crystal phase A has high ion conductivity. The crystal phase A usually also includes peaks at 2θ = 29.4° ± 0.5°, 37.8° ± 0.5°, 41.1° ± 0.5°, and 47.0° ± 0.5°. Also, the half value width of the peak at 2θ = 20.2° ± 0.5° is preferably small. The half value width (FWHM) is, for example, 0.51° or less, may be 0.45° or less, and may be 0.43° or less.

The sulfide solid electrolyte may be provided with a crystal phase (crystal phase B) including peaks at the positions of 2θ = 21.0° ± 0.5° and 28.0° ± 0.5° in an X-ray diffraction measurement using a CuKα-ray, but it is preferable that the crystal phase B is not included. The reason therefor is that the ion conductivity of the crystal phase B is lower than that of the crystal phase A. The crystal phase B usually also includes peaks at 2θ = 32.0° ± 0.5°, 33.4° ± 0.5°, 38.7° ± 0.5°, 42.8° ± 0.5°, and 44.2° ± 0.5°. When I_{20.2} designates a peak intensity of 2θ = 20.2° ± 0.5° in the crystal phase A, and I_{21.0} designates a peak intensity of 2θ = 21.0° ± 0.5° in the crystal phase B, I_{21.0}/I_{20.2} is, for example, 0.4 or less, may be 0.2 or less, and may be 0.

The sulfide solid electrolyte may include a crystal phase such as a Thio-LISICON type crystal phase, a LGPS type crystal phase, and an argyrodite type crystal phase.

Examples of the shape of the sulfide solid electrolyte may include a granular shape. Also, the average particle size (D₅₀) of the sulfide solid electrolyte is, for example, 0.1 µm or more and 50 µm or less. The average particle size (D₅₀) may be obtained by a result of particle distribution measurement with a laser diffraction scattering method. Also, the sulfide solid electrolyte preferably has high ion conductivity. The ion conductivity at 25°C is, for example, 1 * 10⁻⁴ S/cm or more, and may be 1 * 10⁻³ S/cm or more.

The sulfide solid electrolyte may be obtained by, for example, conducting a mechanical milling treatment to a raw material composition containing Li₂S and P₂S₅ to form a sulfide glass, and then conducting a heat treatment to the sulfide glass. In the raw material composition, the proportion of Li₂S with respect to a total of Li₂S and P₂S₅ is, for example, 70 mol% or more, may be 72 mol% or more, and may be 74 mol% or more. Meanwhile, the proportion of the Li₂S is, for example, 80 mol% or less, may be 78 mol% or less, and may be 76 mol% or less. The raw material composition may further contain at least one of LiBr and LiI.

The solid electrolyte layer may be a single layer, and may include a plurality of layers. When the solid electrolyte layer is a single layer, the solid electrolyte layer preferably contains a sulfide solid electrolyte. Since the ion conductivity of the sulfide solid electrolyte is high, by using such a sulfide solid electrolyte, for example, a unit battery with excellent charge and discharge properties can be obtained.

On the other hand, when the solid electrolyte layer includes a plurality of layers, the number of the plurality of layers may be 2, may be 3, and may be 4 or more. Meanwhile, the number of the plurality of layers is, for example, 10 or less. Here, among the plurality of layers (total of N layers), the layer closest to the cathode layer is regarded as a first layer, and the rest of the layers are numbered in the order along the thickness direction until the N^{th} layer. For example, in unit battery 10 illustrated in FIG. 3, solid electrolyte layer 3 includes layers in the order of 1^{st} layer 3a and 2^{nd} layer 3b, from cathode layer 2 side.

In the present disclosure, it is preferable that the first layer contains the above described second halide solid electrolyte. The reason therefor is to remarkably improve the voltage tolerance, as described in Experimental Examples later. The proportion of the second halide solid electrolyte with respect to all the solid electrolytes included in the first layer is, for example, 50 weight% or more, may be 70 weight% or more, and may be 90 weight% or more. The thickness of the first layer is, for example, 1 µm or more, may be 5 µm or more, and may be 7 µm or more. Meanwhile, the thickness of the first layer is, for example, 500 µm or less.

Also, it is preferable that the layer(s) other than the first layer contains a sulfide solid electrolyte. Since the ion conductivity of the sulfide solid electrolyte is high, by using such a sulfide solid electrolyte, for example, a unit battery with excellent charge and discharge properties can be obtained. In particular, it is preferable that the layer closest to the anode layer among the plurality of layers contains the sulfide solid electrolyte.

The thickness of the solid electrolyte layer is not particularly limited, and for example, it is 1 µm or more, and may be 5 µm or more. Meanwhile, the thickness of the solid electrolyte layer is, for example, 1000 µm or less.

### (3) Anode layer

The anode layer in the present disclosure is a layer containing at least an anode active material. Also, the anode layer may contain at least one of a solid electrolyte, a conductive material, and a binder, other than the anode active material.

Examples of the anode active material may include a metal active material, a carbon active material, and an oxide active material. Examples of the metal active material may include Li, In, Al, Si, Sn, and an alloy including at least one kind of these. Examples of the carbon active material may include graphite, hard carbon, and soft carbon. Examples of the oxide active material may include Li₄Ti₅O₁₂, SiO, and Nb₂O₅. Examples of the shape of the anode active material may include a granular shape.

The solid electrolyte, the conductive material and the binder are in the same contents as those described above. Above all, it is preferable that the anode layer contains a sulfide solid electrolyte. The sulfide solid electrolyte is in the same contents as those described above. The thickness of the anode layer is, for example, 1 µm or more and 1000 µm or less.

### (4) Other constitutions

The unit battery in the present disclosure usually comprises a cathode current collector for collecting currents of the cathode active material and an anode current collector for collecting currents of the anode active material. Examples of the material for the cathode current collector may include SUS, aluminum, nickel, iron, titanium and carbon. Meanwhile, examples of the material for the anode current collector may include SUS, copper, nickel, and carbon. Incidentally, examples of the shape of the cathode current collector and the anode current collector may include a foil shape.

### (5) Unit battery

The unit battery in the present disclosure is a battery (lithium ion battery) utilizing Li ion conductivity. Further, the unit battery may be a primary battery and may be a secondary battery, but the latter is preferable. The reason therefor is to be repeatedly charged and discharged and useful as a car-mounted battery for example. Incidentally, the secondary battery includes a usage of the secondary battery as a primary battery (for the purpose of just discharge once after charge).

### 2. All-solid-state battery

In the all-solid-state battery in the present disclosure, a plurality of a unit battery is arranged along a thickness direction and connected in series. Also, a total voltage of the all-solid-state battery at an SOC of 100% is usually 30 V or more. The number of the unit battery is at least 2 or more, may be 6 or more, may be 10 or more, and may be 20 or more. Meanwhile, the number of the unit battery is, for example, 1000 or less and may be 500 or less.

Also, the all-solid-state battery in the present disclosure may include at least one of the unit battery in which the cathode layer contains the first halide solid electrolyte.

Also, in FIG. 2, in the neighboring unit batteries 10, the cathode current collector 1 of one of the unit batteries 10 and the anode current collector 5 of the other of the unit batteries 10 are shared as one current collector. Although not illustrated, in the neighboring unit batteries, the cathode current collector of one of the unit batteries may be a different member from the anode current collector of the other of the unit batteries. In this case, the cathode current collector of one of the unit batteries is preferably arranged to face to the anode current collector of the other of the unit batteries. In addition, the all-solid-state battery usually comprises an outer package for storing a plurality of the unit batteries. The outer package may or may not be flexible.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Experimental Example 1]

### <Production of cathode mixture>

PVDF-HFP (from Sigma-Aldrich) as a binder, VGCF (from Showa Denko K.K.) as a conductive material, Li₃YCl₆ as a solid electrolyte, LiNi_{1/3}Co_{1/3}Mn_{1/3}O₂ (from Sigma-Aldrich) as a cathode active material, were added to an organic solvent. After that, the mixture was kneaded by an ultrasonic homogenizer to obtain slurry. The obtained slurry was dried, mixed by a mortar, and thereby a cathode mixture was obtained.

### <Production of anode mixture>

PVDF-HFP (from Sigma-Aldrich) as a binder, VGCF (from Showa Denko K.K.) as a conductive material, 75Li₃PS₄-15LiBr-10LiI as a solid electrolyte, Si (from Kojundo Chemical Laboratory Co., Ltd.) as an anode active material, were added to an organic solvent. After that, the mixture was kneaded by an ultrasonic homogenizer to obtain slurry. The obtained slurry was dried, mixed by a mortar, and thereby an anode mixture was obtained.

### <Production of mixture for solid electrolyte layer>

PVDF-HFP (from Sigma-Aldrich) as a binder, and 75Li₃PS₄-15LiBr-10LiI as a solid electrolyte were added to an organic solvent. After that, the mixture was kneaded by an ultrasonic homogenizer to obtain slurry. The obtained slurry was dried, mixed by a mortar, and thereby a mixture for solid electrolyte layer was obtained.

### <Production of all-solid-state battery>

The mixture for solid electrolyte layer was placed in a cylinder having ϕ11.28 mm, and compression-powder-molded at the pressure of 1 ton/cm² to form a solid electrolyte layer. The cathode mixture was placed on one surface side of the solid electrolyte layer, and compression-powder-molded at the pressure of 1 ton/cm² to form a cathode layer. After that, the anode mixture was placed on the other surface side of the solid electrolyte layer, and compression-powder-molded at the pressure of 1 ton/cm² to form an anode layer. An Al foil and a Cu foil were prepared respectively as a cathode current collector and an anode current collector, and these were placed on the exposed surface side of the cathode layer and the anode layer, and compression-powder-molded at the pressure of 6 ton/cm². After that, the obtained layered body was restrained to obtain an all-solid-state battery.

### [Experimental Example 2]

An all-solid-state battery was obtained in the same manner as in Experimental Example 1 except that the solid electrolyte used in the cathode mixture was changed to Li₃YCl₃Br₃.

### [Experimental Example 3]

An all-solid-state battery was obtained in the same manner as in Experimental Example 1 except that the solid electrolyte used in the cathode mixture was changed to Li₃YBr₆.

### [Experimental Example 4]

An all-solid-state battery was obtained in the same manner as in Experimental Example 1 except that the solid electrolyte used in the mixture for solid electrolyte layer was changed to Li₃YCl₆.

### [Experimental Example 5]

An all-solid-state battery was obtained in the same manner as in Experimental Example 2 except that the solid electrolyte used in the mixture for solid electrolyte layer was changed to Li₃YCl₃Br₃.

### [Experimental Example 6]

An all-solid-state battery was obtained in the same manner as in Experimental Example 3 except that the solid electrolyte used in the mixture for solid electrolyte layer was changed to Li₃YBr₆.

### [Comparative Experimental Example 1]

An all-solid-state battery was obtained in the same manner as in Experimental Example 1, except that the solid electrolyte used in the cathode mixture was changed to 75Li₃PS₄-15LiBr-10LiI.

### [Comparative Experimental Example 2]

An all-solid-state battery was obtained in the same manner as in Experimental Example 1 except that the solid electrolyte used in the cathode mixture was changed to Li₃PS₄.

### [Comparative Experimental Example 3]

An all-solid-state battery was obtained in the same manner as in Experimental Example 1 except that the solid electrolyte used in the cathode mixture was changed to Li₆PS₅Cl.

### [Evaluation]

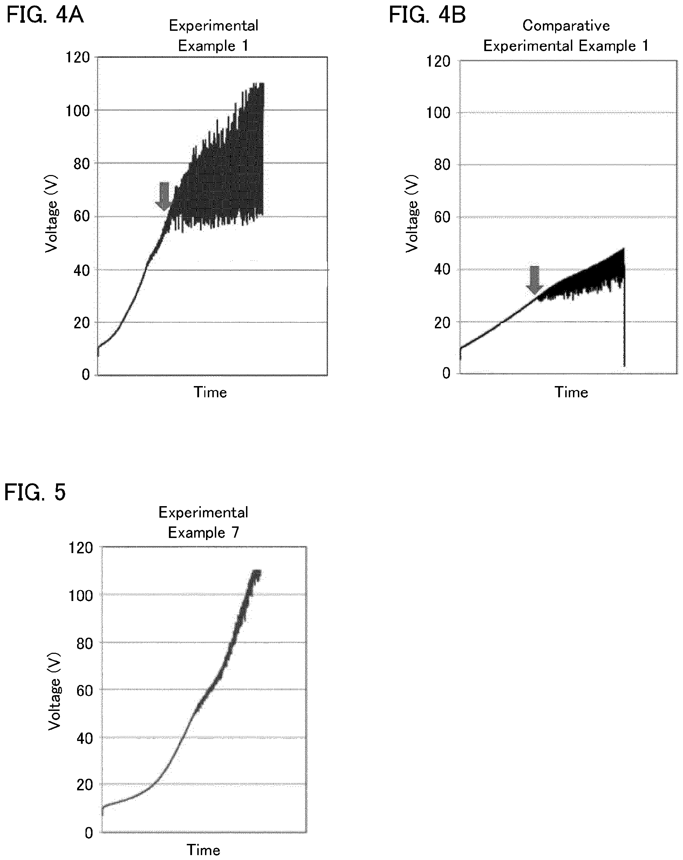

The all-solid-state batteries obtained in Experimental Examples 1 to 6 and Comparative Experimental Examples 1 to 3 were charged at the rate of 0.1 C. In specific, the all-solid-state batteries were charged continuously to overcharge, and the voltage at which voltage drop occurred (voltage at which short circuit occurred) was determined as the voltage tolerance. The results are shown in Table 1. Also, as a representative example of voltage change during charge, the results of Experimental Example 1 and Comparative Experimental Example 1 are shown in FIGS. 4A and 4B.

**[Table 1]**

| | Cathode layer | Solid electrolyte layer | Voltage tolerance (V) |
|---|---|---|---|
| Exp. Ex. 1 | Li₃YCl₆ | 75Li₃PS₄-15LiBr-10LiI | 55 |
| Exp. Ex. 2 | Li₃YCl₃Br₃ | 75Li₃PS₄-15LiBr-10LiI | 56 |
| Exp. Ex. 3 | Li₃YBr₆ | 75Li₃PS₄-15LiBr-10LiI | 52 |
| Exp. Ex. 4 | Li₃YCl₆ | Li₃YCl₆ | 42 |
| Exp. Ex. 5 | Li₃YCl₃Br₃ | Li₃YCl₃Br₃ | 41 |
| Exp. Ex. 6 | Li₃YBr₆ | Li₃YBr₆ | 43 |
| Comp. Exp. Ex. 1 | 75Li₃PS₄-15LiBr-10LiI | 75Li₃PS₄-15LiBr-10LiI | 30 |
| Comp. Exp. Ex. 2 | Li₃PS₄ | 75Li₃PS₄-15LiBr-10LiI | 29 |
| Comp. Exp. Ex. 3 | Li₆PS₅Cl | 75Li₃PS₄-15LiBr-10LiI | 30 |

As shown in Table 1 and FIG. 4A, the voltage tolerance of Experimental Example 1 was 55 V. On the other hand, as shown in Table 1 and FIG. 4B, the voltage tolerance of Comparative Experimental Example 1 was 30 V. In this manner, it was confirmed that the voltage tolerance of Experimental Example 1 was higher than that of Comparative Experimental Example 1. In other words, it was confirmed that short circuit occurrence was suppressed even when a high voltage was applied to the unit battery.

In Comparative Experimental Example 1, the oxidation decomposition reaction (2Li₃PS₄ → Li₄P₂S₆+2S+2Li⁺+2e⁻) of the solid electrolyte included in the cathode layer occurred during overcharge, and Li generated in this reaction moved to the anode layer side to deposit Li dendrite in the anode layer to presumably cause short circuit. On the other hand, in Experimental Example 1, although it was presumed that the oxidation decomposition reaction (Li₃YCl₆ → YCl₃+LiCl+Cl₂(g)+2Li⁺+2e⁻) of the solid electrolyte included in the cathode layer occurred during overcharge, the ion conductivity of YCl₃ (oxidation decomposition product) was lower than that of Li₄P₂S₆ (oxidation decomposition product in Comparative Experimental Example 1). For this reason, it was presumed that the oxidation decomposition reaction did not easily continuously occur to reduce the amount of Li generation, and the Li generated did not easily conduct in the cathode layer; as a result, the voltage tolerance improved.

Also, as shown in Table 1, it was confirmed that the voltage tolerance of Experimental Examples 2 and 6 was respectively higher than that of Comparative Experimental Examples 1 to 3. Incidentally, the voltage tolerance of Experimental Examples 4 to 6 was respectively lower than that of Experimental Examples 1 to 3. The reason therefor is presumably because the reduction decomposition reaction of the solid electrolyte (Li₃YX₆) included in the solid electrolyte layer proceeded in the interface between the solid electrolyte layer and the anode layer, and the oxidation decomposition proceeded at the same time. In other words, for proceeding the decomposition reaction, the oxidation reaction and the reduction reaction need to occur at the same time, but in Experimental Example 4, for example, it is presumed that the voltage was reached at the value the reduction and decomposition of Li₃YCl₆ occurred, and thus the reduction decomposition proceeded, and the oxidation decomposition of substances such as a binder (substances other than the solid electrolyte) proceeded in the oxidation reaction.

### [Experimental Example 7]

First, a cathode mixture and an anode mixture were obtained in the same manner as in Experimental Example 1. Next, PVDF-HFP (from Sigma-Aldrich) as a binder, and Li₃YCl₆ as a solid electrolyte were added to an organic solvent. After that, the mixture was kneaded by an ultrasonic homogenizer to obtain slurry. The obtained slurry was dried, mixed by a mortar, and thereby a mixture for first layer was obtained.

Next, PVDF-HFP (from Sigma-Aldrich) as a binder, and 75Li₃PS₄-15LiBr-10LiI as a solid electrolyte were added to an organic solvent. After that, the mixture was kneaded by an ultrasonic homogenizer to obtain slurry. The obtained slurry was dried, mixed by a mortar, and thereby a mixture for second layer was obtained.

Next, the mixture for first layer was placed in a cylinder having ϕ11.28 mm, and compression-powder-molded at the pressure of 1 ton/cm² to form a first layer. The mixture for second layer was placed on one surface side of the first layer, and compression-powder-molded at the pressure of 1 ton/cm² to form a second layer. After that, the cathode mixture was placed on the exposed surface (surface opposite to the second layer) side of the first layer, and compression-powder-molded at the pressure of 1 ton/cm² to form a cathode layer. After that, the anode mixture was placed on the exposed surface (surface opposite to the first layer) side of the second layer, and compression-powder-molded at the pressure of 1 ton/cm² to form an anode layer. An Al foil and a Cu foil were prepared respectively as a cathode current collector and an anode current collector, and these were placed on the exposed surface side of the cathode layer and the anode layer, and compression-powder-molded at the pressure of 6 ton/cm². After that, the obtained layered body was restrained to obtain an all-solid-state battery.

### [Experimental Examples 8 to 15]

An all-solid-state battery was respectively obtained in the same manner as in Experimental Example 7, except that at least one of the solid electrolyte used in the cathode mixture and the solid electrolyte used in the mixture for first layer, was changed to the solid electrolytes shown in Table 2.

### [Evaluation]

The all-solid-state batteries obtained in Experimental Examples 7 to 15 were charged at the rate of 0.1 C. In specific, the all-solid-state batteries were charged continuously to overcharge, and the voltage at which voltage drop occurred (voltage at which short circuit occurred) was determined as the voltage tolerance. The results are shown in Table 2. Also, as a representative example of voltage change during charge, the result of Experimental Example 7 is shown in FIG. 5.

**[Table 2]**

| | Cathode layer | Solid electrolyte layer | | Voltage tolerance (V) |
|---|---|---|---|---|
| | | first layer | second layer | |
| Exp. Ex. 7 | Li₃YCl₆ | Li₃YCl₆ | 75Li₃PS₄-15LiBr-10LiI | >110 |
| Exp. Ex. 8 | Li₃YCl₆ | Li₃YCl₃Br₃ | 75Li₃PS₄-15LiBr-10LiI | >110 |
| Exp. Ex. 9 | Li₃YCl₆ | Li₃YBr₆ | 75Li₃PS₄-15LiBr-10LiI | >110 |
| Exp. Ex. 10 | Li₃YCl₃Br₃ | Li₃YCl₆ | 75Li₃PS₄-15LiBr-10LiI | >110 |
| Exp. Ex. 11 | Li₃YCl₃Br₃ | Li₃YCl₃Br₃ | 75Li₃PS₄-15LiBr-10LiI | >110 |
| Exp. Ex. 12 | Li₃YCl₃Br₃ | Li₃YBr₆ | 75Li₃PS₄-15LiBr-10LiI | >110 |
| Exp. Ex. 13 | Li₃YBr₆ | Li₃YCl₆ | 75Li₃PS₄-15LiBr-10LiI | >110 |
| Exp. Ex. 14 | Li₃YBr₆ | Li₃YCl₃Br₃ | 75Li₃PS₄-15LiBr-10LiI | >110 |
| Exp. Ex. 15 | Li₃YBr₆ | Li₃YBr₆ | 75Li₃PS₄-15LiBr-10LiI | >110 |

As shown in Table 2 and FIG. 5, in Experimental Example 7, faint voltage drop occurred at 55 V, but unlike Experimental Example 1 (FIG. 4A), large voltage drop did not occur during charge afterwards, and the voltage tolerance was 110 V or more. The equivalent result to this was respectively obtained for Experimental Examples 8 to 15. In this manner, not only in the cathode layer, but also in the first layer, using the specified solid electrolyte allowed the voltage resistance to remarkably improve. The reason therefor is that, during overcharge, although it was presumed that the oxidation decomposition reaction (Li₃YCl₆ → YCl₃+LiCl+Cl₂(g)+2Li⁺+2e⁻) of the solid electrolyte included in the first layer occurred, the ion conductivity of YCl₃ (oxidation decomposition product) was lower than that of Li₄P₂S₆ (oxidation decomposition product in the second layer). For this reason, it was presumed that the oxidation decomposition reaction did not easily continuously occur to reduce the amount of Li generation, and the Li generated did not easily conduct in the cathode layer; as a result, the voltage tolerance improved.

### Reference Sings List

- 1: cathode current collector
- 2: cathode layer
- 3: solid electrolyte layer
- 4: anode layer
- 5: anode current collector
- 10: unit battery
- 100: all-solid-state battery

## Claims

1. A solid-state battery in which a plurality of a unit battery is arranged along a thickness direction and connected in series, wherein:
the unit battery includes a cathode current collector, a cathode layer, a solid electrolyte layer, an anode layer and an anode current collector in this order;
a total voltage of the solid-state battery at an SOC of 100% is 30 V or more; and
the cathode layer in the unit battery contains a first halide solid electrolyte.

2. The solid-state battery according to claim 1, wherein the first halide solid electrolyte is represented by the below composition formula (1):
Li_{α}M¹_{β}X¹_{γ} ... Formula (1);
each of α, β, and γ is a value larger than 0;
M¹ contains at least one selected from the group consisting of metal elements other than Li and metalloid elements; and
X¹ contains at least one selected from the group consisting of F, Cl, Br and I.

3. The solid-state battery according to claim 2, wherein the first halide solid electrolyte is represented by Li_{6-3A}M¹_{A}X¹₆, provided that A satisfies 0 < A < 2, M¹ is at least one kind of Y and In, and X¹ is at least one kind of Cl and Br.

4. The solid-state battery according to claim 3, wherein the M¹ contains at least the Y.

5. The solid-state battery according to any one of claims 1 to 4, wherein the solid electrolyte layer contains a sulfide solid electrolyte.

6. The solid-state battery according to claim 5, wherein the sulfide solid electrolyte contains Li, P and S.

7. The solid-state battery according to any one of claims 1 to 6, wherein
the solid electrolyte layer includes a plurality of layers; and
among the plurality of layers, a first layer closest to the cathode layer contains a second halide solid electrolyte.

8. The solid-state battery according to claim 7, wherein the second halide solid electrolyte is represented by the below composition formula (2):
LiₚM²_{q}X²ᵣ ... Formula (2);
each of p, q, and r is a value larger than 0;
M² contains at least one selected from the group consisting of metal elements other than Li and metalloid elements; and
X² contains at least one selected from the group consisting of F, Cl, Br and I.

9. The solid-state battery according to claim 8, wherein the second halide solid electrolyte is represented by Li_{6-3B}M²_{B}X²₆, provided that B satisfies 0 < B < 2, M² is at least one kind of Y and In, and X² is at least one kind of Cl and Br.

10. The solid-state battery according to claim 9, wherein the M² contains at least the Y.

11. The solid-state battery according to any one of claims 7 to 10, wherein, among the plurality of layers, a layer other than the first layer contains a sulfide solid electrolyte.

12. The solid-state battery according to claim 11, wherein the sulfide solid electrolyte contains Li, P and S.
